# EUROPEAN PATENT APPLICATION

(11) **EP 4 836 149 A1**
(43) Date of publication of application: **04.11.2026**
(21) Application number: 24949123.4
(22) Date of filing: 31.07.2024
(51) Int. Cl.: H01M 50/291, H01M 50/289, H01M 50/20

(54) **BATTERY DEVICE AND ELECTRIC APPARATUS**

(71) Applicant: Contemporary Amperex Technology Co., Limited, Ningde, Fujian 352100 (CN)
(72) Inventor: WU, Guangdang, Ningde, Fujian 352100 (CN); WANG, Jirong, Ningde, Fujian 352100 (CN); LUO, Wenchao, Ningde, Fujian 352100 (CN)
(74) Representative: Ziebig Hengelhaupt Intellectual Property Attorneys Patentanwaltskanzlei PartGmbB
(86) International application number: PCT/CN2024/108985
(87) International publication number: WO 2026/025382

(57) **Abstract**

A battery device (100) and an electric apparatus. The battery device (100) comprises a case (30), a support (40), a first battery cell (11) and a second battery cell (21), wherein the support (40) is disposed inside the case (30) and divides the internal space of the case (30) into a first accommodating space (30c) and a second accommodating space (30d) located on two sides of the support (40); the first battery cell (11) is disposed in the first accommodating space (30c) and supported on the case (30); the second battery cell (21) is disposed in the second accommodating space (30d) and supported on the support (40); and first protrusions (33) are formed on a wall of the case (30), and the support (40) is connected to the first protrusions (33). The technical solution can improve the assembly efficiency of the battery device (100).

## Description

### TECHNICAL FIELD

The present application relates to the technical field of battery apparatuses, and specifically relates to a battery apparatus and an electric device.

### BACKGROUND

Energy saving and emission reduction are key to the sustainable development of the automotive industry, and electric vehicles have become an important part of the sustainable development of the automotive industry due to their advantages in energy saving and environmental protection. For electric vehicles, battery technology is an important factor related to their development.

In the manufacturing process of the battery apparatus, low assembly efficiency of the battery apparatus is an issue that cannot be ignored. Therefore, how to improve the assembly efficiency of the battery apparatus is a technical problem that urgently needs to be solved in battery technology.

### SUMMARY

The present application provides a battery apparatus and an electric device, which can improve the assembly efficiency of the battery apparatus.

The present application is implemented through the following technical solutions:
In a first aspect, embodiments of the present application provide a battery apparatus, which includes a box, a bracket, a first battery cell, and a second battery cell. The bracket is disposed in the box, dividing an internal space of the box into a first accommodating space and a second accommodating space located on two sides of the bracket; the first battery cell is disposed in the first accommodating space and supported on the box; and the second battery cell is disposed in the second accommodating space and supported on the bracket; where a wall of the box is provided with a first protrusion, and the bracket is connected to the first protrusion.

In the battery apparatus according to embodiments of the present application, the second battery cell can be integrated into the bracket, and the bracket is connected to the first protrusion, allowing the assembly of the first battery cell with the first bottom wall and the assembly of the second battery cell with the bracket to be performed simultaneously, saving assembly time of the battery apparatus, and improving the assembly efficiency of the battery. At the same time, the first protrusion is formed on the wall of the box, the bracket is connected to the first protrusion, and the structure after assembly of the bracket and the first protrusion has relatively high assembly strength, making the battery apparatus have relatively high reliability.

According to some embodiments of the present application, the box includes a first box and a second box oppositely disposed along a first direction, the first box and the second box are fitted with each other, the first protrusion is formed on the first box, the first box and the bracket enclose the first accommodating space, and the second box and the bracket enclose the second accommodating space.

In the above solution, the first box and the second box are fitted with each other, and the first protrusion is formed on the first box, facilitating the assembly of the first battery cell and the second battery cell with the box.

According to some embodiments of the present application, the first box includes a first bottom wall and a first side wall, the first side wall is provided around the first bottom wall, the first bottom wall supports the first battery cell, and the first protrusion is provided at an end of the first side wall back away from the first bottom wall.

In the above solution, the first bottom wall supports the first battery cell, facilitating the assembly positioning of the first battery cell, and the first protrusion is provided at the end of the first side wall back away from the first bottom wall, facilitating the assembly of the bracket with the first protrusion and reducing the interference of the first protrusion and the bracket with the first battery cell.

According to some embodiments of the present application, the first side wall includes two first sub-side walls oppositely disposed along a second direction, the first battery cell is disposed between the two first sub-side walls, the first protrusion is formed on an inner surface of the first sub-side wall, and the second direction is perpendicular to the first direction.

In the above solution, the two first sub-side walls are parallel to each other, and the first battery cell is disposed between the two first sub-side walls, facilitating the protection of the first battery cell. The first protrusion is formed on the inner surface of the first sub-side wall, and two ends of the bracket in the second direction are respectively connected to the first protrusions of the two first sub-side walls, facilitating the assembly of the bracket with the first side wall, and stable connection between the bracket and the first side wall.

According to some embodiments of the present application, the first protrusion extends along a third direction, and the third direction, the second direction, and the first direction are pairwise perpendicular.

In the above solution, the first protrusion has a larger size in the third direction, facilitating a larger connection area between the bracket and the first protrusion in the third direction, and stable connection between the bracket and the first protrusion.

According to some embodiments of the present application, the first side wall includes two second sub-side walls oppositely disposed along the third direction. The first box further includes a first beam and a second beam spaced apart along the third direction, the first beam and the second beam are connected to the first bottom wall, the first beam and the second beam are located between the two second sub-side walls, the first battery cell is located between the first beam and the second beam, and the third direction is perpendicular to the first direction.

In the above solution, the bracket, the first beam, the second beam, the first bottom wall, and the two first sub-side walls enclose the first accommodating space for accommodating the first battery cell. At the same time, the first beam and the second beam both cooperate with the first battery cell, facilitating the protection of the first battery cell in the third direction and reducing the risk of damage to the first battery cell.

According to some embodiments of the present application, cavities are formed inside both the first beam and the second beam.

In the above solution, cavities are formed inside both the first beam and the second beam, and the first beam and the second beam can be expansion beams, facilitating the absorption of the action force exerted by the first battery cell in the third direction.

According to some embodiments of the present application, the number of the first battery cells is multiple, and the multiple first battery cells are stacked along the third direction. The battery apparatus further includes a first restraining member, the first restraining member extends along the third direction, the first restraining member is located on a side of the first battery cell back away from the first bottom wall, the first restraining member is connected to the first battery cell, and two ends of the first restraining member are respectively connected to the first beam and the second beam.

In the above solution, the multiple first battery cells are stacked along the third direction, two ends of the first restraining member are respectively connected to the first beam and the second beam, and the first restraining member is connected to the first battery cell. The first restraining member can restrain the first battery cell from moving in a direction back away from the first bottom wall. At the same time, the first restraining member can also cooperate with the first beam and the second beam to restrain the expansion and deformation of the first battery cell in the third direction.

According to some embodiments of the present application, the number of the first restraining members is multiple, the multiple first restraining members are spaced apart along the second direction, and the second direction, the third direction, and the first direction are pairwise perpendicular.

In the above solution, the multiple first restraining members are spaced apart along the second direction, enabling the connection of the first beam and the second beam at multiple positions in the second direction, further restricting the movement of the first battery cell in the direction back away from the first bottom wall, and further restraining the expansion and deformation of the first battery cell in the third direction.

According to some embodiments of the present application, the first protrusion is provided with a first mounting hole, the bracket is provided with a second mounting hole corresponding to the first mounting hole, the battery apparatus further includes a locking piece, and the locking piece passes through the second mounting hole and the first mounting hole to lock the bracket to the first protrusion.

In the above solution, the bracket is locked to the first protrusion through the locking piece, facilitating the assembly of the bracket with the first protrusion, firm connection between the bracket and the first protrusion, and the disassembly of the bracket from the first protrusion.

According to some embodiments of the present application, the bracket includes a supporting wall, the supporting wall is located between the first battery cell and the second battery cell, the supporting wall supports the second battery cell, and the supporting wall is connected to the first protrusion.

In the above solution, the supporting wall is located between the first battery cell and the second battery cell, facilitating the separation of the first battery cell and the second battery cell; and the second battery cell can be integrated into the supporting wall, facilitating the improvement of the assembly efficiency of the battery apparatus.

According to some embodiments of the present application, the supporting wall includes a body and an extending portion, the body supports the second battery cell, the body has a first surface and a second surface oppositely disposed along the first direction, and an outer peripheral surface connecting the first surface and the second surface, the extending portion protrudes from the outer peripheral surface and is connected to the first protrusion, and the first accommodating space and the second accommodating space are distributed along the first direction.

In the above solution, the body has relatively high strength, facilitating the support of the second battery cell by the body; and the extending portion protrudes from the outer peripheral surface of the body and is connected to the first protrusion, facilitating the assembly of the supporting wall with the first protrusion. In addition, the extending portion can be integrally formed with the body, making the supporting wall have relatively high overall strength.

According to some embodiments of the present application, the bracket further includes two second side walls oppositely disposed along the third direction, the two second side walls are connected to the supporting wall, the second battery cell is disposed between the two second side walls, the third direction is perpendicular to the first direction, and the first accommodating space and the second accommodating space are distributed along the first direction.

In the above solution, the two second side walls are connected to the supporting wall, and the two second side walls and the supporting wall enclose a space for accommodating the second battery cell. At the same time, the second side wall cooperates with the second battery cell, facilitating the protection of the second battery cell in the third direction and reducing the risk of damage to the second battery cell.

According to some embodiments of the present application, the number of the second battery cells is multiple, and the multiple second battery cells are stacked along the third direction. The battery apparatus further includes a second restraining member, the second restraining member extends along the third direction, the second restraining member is located on a side of the second battery cell back away from the supporting wall, the second restraining member is connected to the second battery cell, and two ends of the second restraining member are respectively connected to the two second side walls.

In the above solution, the multiple second battery cells are stacked along the third direction, two ends of the second restraining member are respectively connected to the two second side walls, and the second restraining member is connected to the second battery cell. The second restraining member can restrain the second battery cell from moving in a direction back away from the supporting wall. At the same time, the second restraining member can also cooperate with the two second side walls to restrain the expansion and deformation of the second battery cell in the third direction.

According to some embodiments of the present application, the number of the second restraining members is multiple, the multiple second restraining members are spaced apart along the second direction, and the second direction, the third direction, and the first direction are pairwise perpendicular.

In the above solution, the multiple second restraining members are spaced apart along the second direction, enabling the connection of the two second side walls at multiple positions in the second direction, further restricting the movement of the second battery cell in the direction back away from the supporting wall, and further restraining the expansion and deformation of the second battery cell in the third direction.

According to some embodiments of the present application, a cavity is formed inside the second side wall.

In the above solution, a cavity is formed inside the second side wall, and the second side wall can be an expansion beam, facilitating the absorption of the action force exerted by the second battery cell in the third direction.

According to some embodiments of the present application, the box includes a first bottom wall, the first bottom wall supports the first battery cell, a first flow channel is formed inside the first bottom wall, and the first flow channel is used for accommodating a heat exchange medium; and a second flow channel is formed inside the bracket, and the second flow channel is used for accommodating a heat exchange medium.

In the above solution, the first flow channel accommodates the heat exchange medium, facilitating heat exchange between the first bottom wall and the first battery cell to regulate the temperature of the first battery cell; and the second flow channel accommodates the heat exchange medium, facilitating heat exchange between the bracket and the second battery cell to regulate the temperature of the second battery cell. At the same time, since the bracket is located between the second battery cell and the first battery cell, the bracket can also perform heat exchange with the first battery cell to regulate the temperature of the first battery cell.

According to some embodiments of the present application, the battery apparatus further includes a first inlet branch pipe, a second inlet branch pipe, and an inlet main pipe, the first inlet branch pipe is connected to the first bottom wall and communicates with the first flow channel, the second inlet branch pipe is connected to the bracket and communicates with the second flow channel, and the first inlet branch pipe and the second inlet branch pipe both communicate with the inlet main pipe; and/or, the battery apparatus further includes a first outlet branch pipe, a second outlet branch pipe, and an outlet main pipe, the first outlet branch pipe is connected to the first bottom wall and communicates with the first flow channel, the second outlet branch pipe is connected to the bracket and communicates with the second flow channel, and the first outlet branch pipe and the second outlet branch pipe both communicate with the outlet main pipe.

In the above solution, the first inlet branch pipe and the second inlet branch pipe both communicate with the inlet main pipe, facilitating the delivery of the heat exchange medium to the first flow channel and the second flow channel through the inlet main pipe; and the first outlet branch pipe and the second outlet branch pipe both communicate with the outlet main pipe, facilitating the output of the heat exchange medium flowing out from the first flow channel and the second flow channel through the outlet main pipe.

In a second aspect, embodiments of the present application further provide an electric device, which includes the battery apparatus provided according to any one of the above embodiments.

Additional aspects and advantages of the present application will be partially given in the following description, partially become obvious from the following description, or be understood through practice of the present application.

### BRIEF DESCRIPTION OF DRAWINGS

In order to more clearly illustrate the technical solutions of the embodiments of the present application, the drawings to be used in the embodiments will be briefly introduced below. It should be understood that the following drawings only illustrate some embodiments of the present application, and therefore should not be regarded as limiting the scope. For those of ordinary skill in the art, other related drawings can also be obtained based on these drawings without creative effort.
FIG. 1 is a schematic structural diagram of a vehicle provided in some embodiments of the present application;
FIG. 2 is an exploded schematic structural diagram of a battery apparatus provided in some embodiments of the present application;
FIG. 3 is a schematic diagram of a first battery cell and a second battery cell provided in some embodiments of the present application;
FIG. 4 is a cross-sectional view of a partial structure of a battery apparatus provided in some embodiments of the present application;
FIG. 5 is a cross-sectional view of a battery apparatus provided in some embodiments of the present application;
FIG. 6 is a schematic structural diagram of a first box provided in some embodiments of the present application;
FIG. 7 is a schematic structural diagram of a bracket provided in some embodiments of the present application;
FIG. 8 is a partial enlarged view at A in FIG. 4;
FIG. 9 is a schematic structural diagram of a supporting wall provided in some embodiments of the present application;
FIG. 10 is a schematic diagram of a partial structure of a battery apparatus provided in some embodiments of the present application; and
FIG. 11 is a partial enlarged view at B in FIG. 10.

In the drawings, the drawings are not drawn to actual scale.

Reference numerals in the drawings: 100. battery apparatus; 11. first battery cell; 21. second battery cell; 30. box; 30a. first box; 30b. second box; 30c. first accommodating space; 30d. second accommodating space; 31. first bottom wall; 311. first flow channel; 32. first side wall; 321. first sub-side wall; 322. second sub-side wall; 33. first protrusion; 331. first mounting hole; 34. first beam; 35. second beam; 40. bracket; 41. second mounting hole; 42. supporting wall; 421. body; 4211. first surface; 4212. second surface; 4213. outer peripheral surface; 422. extending portion; 4221. connecting portion; 4222. transition portion; 43. second side wall; 44. second flow channel; 50. locking piece; 60. second restraining member; 71. first inlet branch pipe; 72. second inlet branch pipe; 73. inlet main pipe; 74. first outlet branch pipe; 75. second outlet branch pipe; 76. outlet main pipe; 80. first restraining member; 200. controller; 300. motor; 1000. vehicle; X. third direction; Y. second direction; and Z. first direction.

### DESCRIPTION OF EMBODIMENTS

The embodiments of the present application will be further described in detail below in combination with the drawings and embodiments. The detailed description and drawings of the following embodiments are used to exemplarily illustrate the principles of the present application, but cannot be used to limit the scope of the present application, that is, the present application is not limited to the described embodiments.

Unless otherwise defined, all technical and scientific terms used herein have the same meaning as commonly understood by those skilled in the technical field to which the present application belongs; the terms used herein are only for the purpose of describing specific embodiments and are not intended to limit the present application; and the terms "include" and "have" and any variations thereof in the specification and claims of the present application and the above description of the drawings are intended to cover non-exclusive inclusions.

In the description of the embodiments of the present application, the technical terms "first", "second" and the like are only used to distinguish different objects, and cannot be understood as indicating or implying relative importance or implicitly indicating the number, specific order or primary-secondary relationship of the indicated technical features.

As used herein, "embodiment" means that a particular feature, structure, or characteristic described in connection with the embodiment can be included in at least one embodiment of the present application. The appearance of the phrase in various places in the specification does not necessarily refer to the same embodiment, nor is it an independent or alternative embodiment that is mutually exclusive from other embodiments. Those skilled in the art clearly and implicitly understand that the embodiments described herein can be combined with other embodiments.

In the description of the present application, it should be noted that, unless otherwise clearly specified and limited, the terms "mounting", "connecting", "join", "attaching" should be understood in a broad sense, for example, it can be a fixed connection, a detachable connection, or an integral connection; or it can be a direct connection, or an indirect connection through an intermediary, and it can be the communication between two elements. For those of ordinary skill in the art, the specific meanings of the above terms in the present application can be understood according to specific situations.

The term "and/or" in the present application merely describes the association relationship of the associated objects, indicating that there can be three relationships, for example, A and/or B, which can indicate: A exists alone, A and B exist simultaneously, B exists alone. In addition, the character "/" in the present application generally indicates that the preceding and following associated objects are in an "or" relationship.

"Multiple" appearing in the present application refers to two or more (including two), similarly, "multiple groups" refers to two or more groups (including two groups), and "multiple pieces" refers to two or more pieces (including two pieces).

The battery apparatus mentioned in the embodiments of the present application may include one or more battery cell assemblies for providing voltage and capacity. The battery cell assembly may include multiple battery cells, and the multiple battery cells are connected in series, parallel, or series-parallel via a bus component.

In some embodiments, the battery cell assembly is usually formed by arranging multiple battery cells. As an example, the battery cell assembly can be a battery module, and the battery module is formed by arranging and fixing multiple battery cells into an independent module. As an example, the battery module can be formed by bundling multiple battery cells with ties.

In some embodiments, the battery apparatus can be a battery pack, the battery pack includes a box and one or more battery cell assemblies, and the battery cell assemblies are accommodated in the box.

As an example, the battery cell assembly can be a battery module, and the battery cell assembly can be accommodated in the box by fixing the battery module in the box.

As an example, the battery cell assembly can also be accommodated in the box by directly fixing multiple battery cells to the box.

As an example, the box may include a first box and a second box. The first box and the second box are fitted with each other, forming a closed space inside the box to accommodate the battery cell assembly. The closed here refers to covering or closing, which can be sealed or non-sealed. The first box can be a top cover or a bottom plate.

As an example, the box may include a top cover, a frame, and a bottom plate. The top cover and the bottom plate are both connected to the frame, forming a closed space inside the box to accommodate the battery cell assembly.

As an example, the box can be part of the chassis structure of a vehicle. For example, the top cover of the box can be at least part of the floor of the vehicle, or the frame of the box can be at least part of the cross beams and longitudinal beams of the vehicle.

In some embodiments, the battery apparatus refers to an energy storage apparatus, and the energy storage apparatus includes a box with a door provided on at least one side of the box. The energy storage apparatus includes an energy storage container, an energy storage cabinet, or the like.

In the embodiments of the present application, the battery cell can be a secondary battery, and the secondary battery refers to a battery cell that can continue to be used by activating the active material through charging after the battery cell is discharged.

The battery cell can be, but is not limited to, a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, and a lead-acid battery.

As an example, the battery cell can be a cylindrical battery cell, a prismatic battery cell, a pouch battery cell, or a battery cell of other shapes. The prismatic battery cell includes a square shell battery cell, a blade-shaped battery cell, a polygonal battery, and the polygonal battery is, for example, a hexagonal prism battery. The embodiments of the present application have no particular limitation.

The development of battery technology needs to consider multiple design factors at the same time, such as performance parameters including energy density, discharge capacity, and charge-discharge rate. In addition, the assembly efficiency of the battery also needs to be considered.

In some embodiments, in order to increase the energy density of the battery apparatus, the battery apparatus needs to be provided with more battery cells, so multiple layers of battery cells need to be provided inside the box of the battery apparatus. However, the internal space of the box of the battery apparatus is limited, and the assembly efficiency of multi-layer battery cells is low, resulting in relatively low assembly efficiency of the battery apparatus.

In view of this, in order to solve the problem that the assembly efficiency of multi-layer battery cells is low, leading to relatively low assembly efficiency of the battery apparatus, embodiments of the present application provide a battery apparatus, which includes a box, a bracket, a first layer of battery cells, and a second layer of battery cells. The bracket is disposed in the box, dividing an internal space of the box into a first accommodating space and a second accommodating space located on two sides of the bracket; the first battery cell is disposed in the first accommodating space and supported on the box; and the second battery cell is disposed in the second accommodating space and supported on the bracket; where a wall of the box is provided with a first protrusion, and the bracket is connected to the first protrusion. The battery apparatus has relatively high assembly efficiency.

In such a battery apparatus, the bracket is disposed between the first battery cell and the second battery cell, the bracket supports the second battery cell, and the bracket is connected to the first protrusion. During the assembly process of the battery apparatus, the assembly of the first battery cell with the first bottom wall and the assembly of the second battery cell with the bracket can be performed simultaneously, facilitating the saving of assembly time and improving the assembly efficiency of the battery. At the same time, the first protrusion is formed on the wall of the box, the bracket is connected to the first protrusion, and the structure after assembly of the bracket and the first protrusion has relatively high assembly strength, making the battery apparatus have relatively high reliability.

The battery apparatus disclosed in the embodiments of the present application can be used in, but is not limited to, electric devices such as vehicles, ships, or aircraft. The power system of the electric device can be composed by using the battery apparatus disclosed in the present application.

The technical solutions described in the embodiments of the present application are all applicable to various electric devices using battery cells and battery apparatuses, such as mobile phones, portable devices, notebook computers, battery bicycles, electric toys, electric tools, vehicles, ships, and spacecraft. For example, aerospace vehicles include airplanes, rockets, space shuttles, and spaceships.

The following embodiments are described by taking a vehicle as an example of an electric device according to one embodiment of the present application for convenience of explanation.

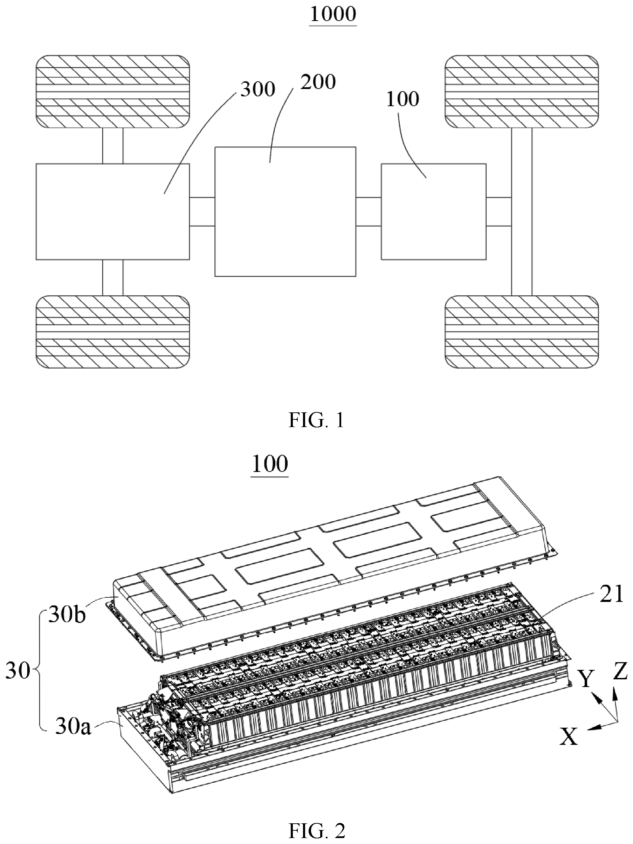

Referring to FIG. 1, FIG. 1 is a schematic structural diagram of a vehicle provided in some embodiments of the present application. The vehicle 1000 can be a fuel vehicle, a gas vehicle, or a new energy vehicle, and the new energy vehicle can be a pure electric vehicle, a hybrid vehicle, an extended-range vehicle, or the like. A battery apparatus 100 is provided inside the vehicle 1000, and the battery apparatus 100 can be provided at the bottom, head, or tail of the vehicle 1000. The battery apparatus 100 can be used for power supply of the vehicle 1000, for example, the battery apparatus 100 can serve as an operating power source for the vehicle 1000, used for the circuit system of the vehicle 1000, such as for starting, navigation, and working power needs during operation of the vehicle 1000.

The vehicle 1000 may further include a controller 200 and a motor 300, and the controller 200 is used to control the battery apparatus 100 to supply power to the motor 300, for example, for starting, navigation, and working power needs during driving of the vehicle 1000.

In some embodiments of the present application, the battery apparatus 100 can not only serve as an operating power source for the vehicle 1000, but also as a driving power source for the vehicle 1000, replacing or partially replacing fuel or natural gas to provide driving power for the vehicle 1000.

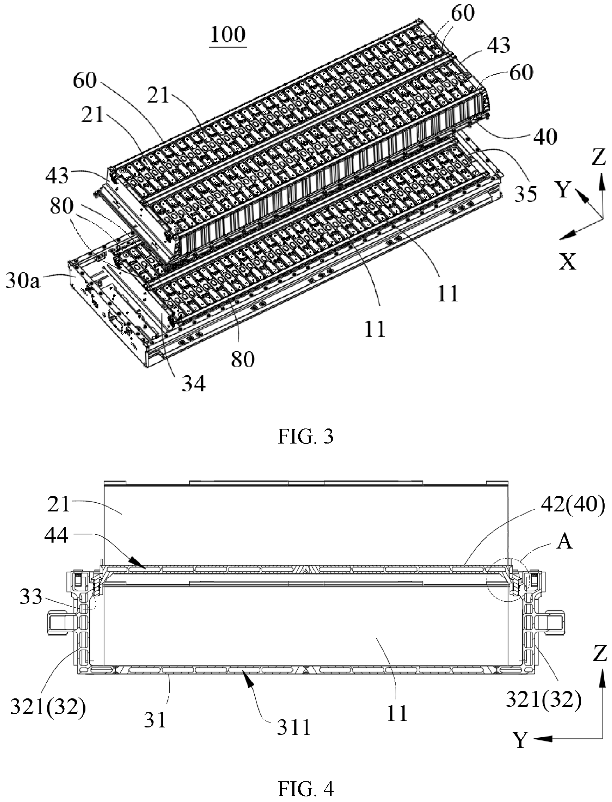

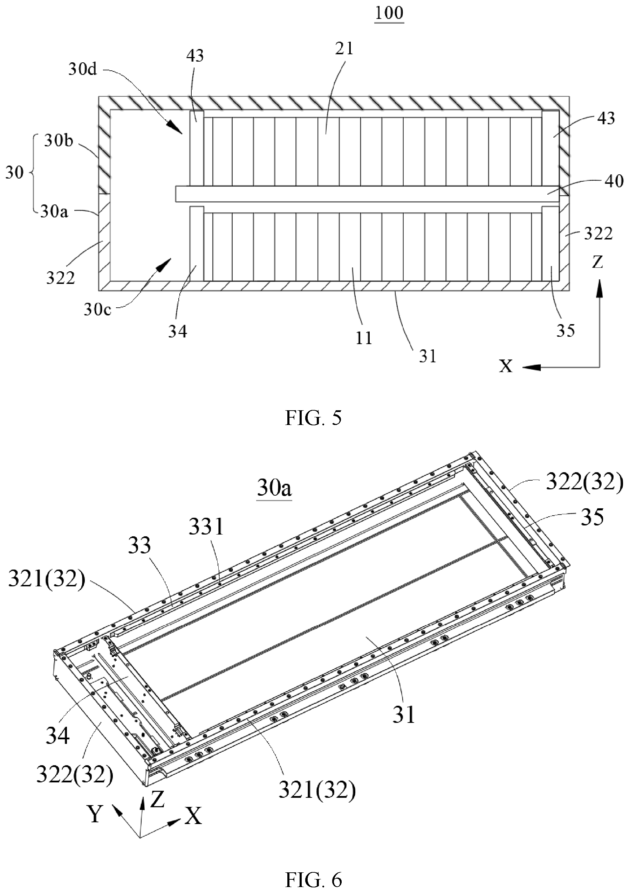

Referring to FIG. 2 to FIG. 5, FIG. 2 is an exploded schematic structural diagram of a battery apparatus provided in some embodiments of the present application, FIG. 3 is a schematic diagram of a first battery cell and a second battery cell provided in some embodiments of the present application, FIG. 4 is a cross-sectional view of a partial structure of a battery apparatus provided in some embodiments of the present application, and FIG. 5 is a cross-sectional view of a battery apparatus provided in some embodiments of the present application. Embodiments of the present application provide a battery apparatus 100, which includes a first battery cell 11, a second battery cell 21, a box 30, and a bracket 40. The bracket 40 is disposed in the box 30, dividing the internal space of the box 30 into a first accommodating space 30c and a second accommodating space 30d located on two sides of the bracket 40. The first battery cell 11 is disposed in the first accommodating space 30c and supported on the box 30. The second battery cell 21 is disposed in the second accommodating space 30d and supported on the bracket 40. A wall of the box 30 is provided with a first protrusion 33, and the bracket 40 is connected to the first protrusion 33.

The box 30 is used to provide an accommodating space for the first battery cell 11 and the second battery cell 21.

The bracket 40 cooperates with the box 30 to divide the inside of the box 30 into the first accommodating space 30c and the second accommodating space 30d, the first accommodating space 30c is used for accommodating the first battery cell 11, and the second accommodating space 30d is used for accommodating the second battery cell 21.

In some embodiments, the first accommodating space 30c and the second accommodating space 30d can be distributed along a first direction Z, such that the first battery cell 11 and the second battery cell 21 are arranged along the first direction Z. For example, along the first direction Z, the first battery cell 11 and the second battery cell 21 at least partially overlap.

Optionally, along the first direction Z, the first battery cell 11 and the second battery cell 21 completely overlap, for example, the first battery cell 11 and the second battery cell 21 can have the same structure, facilitating processing and manufacturing.

The first battery cell 11 is supported by the box, for example, the first battery cell 11 is supported by the wall of the box 30 enclosing the first accommodating space 30c.

The second battery cell 21 is supported by the bracket 40, for example, the second battery cell 21 is supported by a portion of the bracket 40 enclosing the second accommodating space 30d.

The first protrusion 33 is formed on the wall of the box 30, the first protrusion 33 can be formed on the inner surface of the wall of the box 30, and the first protrusion 33 can also be formed on the outer surface of the wall of the box 30. The inner surface of the wall of the box 30 refers to the surface of the wall of the box 30 enclosing the inside of the box 30, and the outer surface of the wall of the box 30 refers to the surface of the wall of the box 30 back away from the inside of the box 30. The first protrusion 33 is integrally formed with the wall of the box 30, such that the joint between the first protrusion 33 and the wall of the box 30 has relatively high strength, facilitating the enhancement of the assembly strength between the bracket 40 and the first protrusion 33.

The second battery cell 21 can be integrated into the bracket 40. During the assembly process of the battery apparatus 100, the assembly of the first battery cell 11 with the box 30 and the assembly of the second battery cell 21 with the bracket 40 can be performed synchronously, and then the bracket 40 is connected to the first protrusion 33, saving assembly time and improving assembly efficiency.

The number of the first battery cells 11 can be multiple, and the multiple first battery cells 11 can be connected in series, parallel, or series-parallel, where being connected in series-parallel refers to both series and parallel connections among the multiple first battery cells 11.

The number of the second battery cells 21 can be multiple, and the multiple second battery cells 21 can be connected in series, parallel, or series-parallel, where being connected in series-parallel refers to both series and parallel connections among the multiple second battery cells 21.

The first battery cell 11 and the second battery cell 21 can be secondary batteries or primary batteries; and the first battery cell 11 and the second battery cell 21 can also be lithium-sulfur batteries, sodium-ion batteries, or magnesium-ion batteries, but are not limited thereto.

In the battery apparatus 100 according to embodiments of the present application, the second battery cell 21 can be integrated into the bracket 40, and the bracket 40 is connected to the first protrusion 33, allowing the assembly of the first battery cell 11 with the first bottom wall 31 and the assembly of the second battery cell 21 with the bracket 40 to be performed simultaneously, saving assembly time of the battery apparatus 100 and improving the assembly efficiency of the battery. At the same time, the first protrusion 33 is formed on the wall of the box 30, the bracket 40 is connected to the first protrusion 33, and the structure after assembly of the bracket 40 and the first protrusion 33 has high assembly strength, making the battery apparatus 100 have high reliability.

Referring to FIG. 5, according to some embodiments of the present application, the box 30 includes a first box 30a and a second box 30b oppositely disposed along the first direction Z, the first box 30a and the second box 30b are fitted with each other, the first protrusion 33 is formed on the first box 30a, the first box 30a and the bracket 40 enclose the first accommodating space 30c, and the second box 30b and the bracket 40 enclose the second accommodating space 30d.

The first box 30a and the second box 30b are oppositely disposed along the first direction Z, and the first accommodating space 30c and the second accommodating space 30d are distributed along the first direction Z.

The first box 30a and the second box 30b can be two components with the same structure, and the first box 30a and the second box 30b can be two components with different structures.

In some embodiments, the first box 30a can be a lower box, and the second box 30b can be a box cover. For example, after the first battery cell 11 and the second battery cell 21 are both assembled with the first box 30a, the second box 30b cooperates with the first box 30a to accommodate the first battery cell 11 and the second battery cell 21 in the accommodating space.

In the above solution, the first box 30a and the second box 30b are fitted with each other, and the first protrusion 33 is formed on the first box 30a, facilitating the assembly of the first battery cell 11 and the second battery cell 21 with the box 30.

Referring to FIG. 4 and FIG. 5, and further referring to FIG. 6, FIG. 6 is a schematic structural diagram of a first box provided in some embodiments of the present application. According to some embodiments of the present application, the first box 30a includes a first bottom wall 31 and a first side wall 32, the first side wall 32 is provided around the first bottom wall 31, the first bottom wall 31 supports the first battery cell 11, and the first protrusion 33 is provided at an end of the first side wall 32 back away from the first bottom wall 31.

One end of the first side wall 32 is connected to the first bottom wall 31, the other end of the first side wall 32 is provided with an opening, and the second box 30b is fastened with the first box 30a and covers the opening.

In some embodiments, the first battery cell 11 can be adhered to the first bottom wall 31, facilitating the positioning of the first battery cell 11.

In some embodiments, the first protrusion 33 can protrude from the inner surface of the first side wall 32, facilitating the formation of a connection portion connected to the bracket 40 on the inner side of the first side wall 32. The inner surface of the first side wall 32 can be the surface of the first side wall 32 enclosing the first accommodating space 30c.

In the above solution, the first bottom wall 31 supports the first battery cell 11, facilitating the assembly positioning of the first battery cell 11, and the first protrusion 33 is provided at the end of the first side wall 32 back away from the first bottom wall 31, facilitating the assembly of the bracket 40 with the first protrusion 33 and reducing the interference of the first protrusion 33 and the bracket 40 with the first battery cell 11.

Referring to FIG. 4 and FIG. 6, according to some embodiments of the present application, the first side wall 32 includes two first sub-side walls 321 oppositely disposed along a second direction Y, the first battery cell 11 is disposed between the two first sub-side walls 321, the first protrusion 33 is formed on an inner surface of the first sub-side wall 321, and the second direction Y is perpendicular to the first direction Z.

The first sub-side wall 321 and the second sub-side wall are two walls constituting the first side wall 32, the first sub-side wall 321 and the second sub-side wall are spaced apart along the second direction Y, and the first sub-side wall 321 and the second sub-side wall are parallel to each other.

In the second direction Y, the first battery cell 11 is disposed between the two first sub-side walls 321, and the two first sub-side walls 321 protect the first battery cell 11, reducing the risk of damage to the first sub-side wall 321.

The first protrusion 33 is formed on the inner surface of the first sub-side wall 321, and the first protrusion 33 is distributed at two ends of the bracket 40 in the second direction Y, facilitating the connection of two ends of the bracket 40 in the second direction Y with the first side wall 32, and stable connection between the bracket 40 and the first side wall 32.

Referring to FIG. 6, according to some embodiments of the present application, the first protrusion 33 extends along a third direction X, and the third direction X, the second direction Y, and the first direction Z are pairwise perpendicular.

The first protrusion 33 extends along the third direction X, and the length direction of the first protrusion 33 can be parallel to the third direction X.

In some embodiments, on the same first sub-side wall 321, the number of the first protrusions 33 can be one, and the first protrusion 33 has a larger connection size with the bracket 40; or, on the same first sub-side wall 321, the number of the first protrusions 33 can also be multiple, the multiple first protrusions 33 are spaced apart along the third direction X on the inner surface of the first side wall 32, and the multiple first protrusions 33 have a larger connection area with the bracket 40.

In the above solution, the first protrusion 33 has a larger size in the third direction X, facilitating a larger connection area between the bracket 40 and the first protrusion 33 in the third direction X, and stable connection between the bracket 40 and the first protrusion 33.

Referring to FIG. 3, FIG. 5, and FIG. 6, according to some embodiments of the present application, the first side wall 32 includes two second sub-side walls 322 oppositely disposed along the third direction X. The first box 30a further includes a first beam 34 and a second beam 35 spaced apart along the third direction X, the first beam 34 and the second beam 35 are connected to the first bottom wall 31, the first beam 34 and the second beam 35 are located between the two second sub-side walls 322, the first battery cell 11 is located between the first beam 34 and the second beam 35, and the third direction X is perpendicular to the first direction Z.

In some embodiments, two ends of the second sub-side wall 322 in the second direction Y are respectively connected to the two first sub-side walls 321, along the third direction X, the first beam 34 and the second beam 35 are located between the two second sub-side walls 322, the bracket 40, the first beam 34, the second beam 35, and the two first sub-side walls 321 enclose the first accommodating space 30c, and the first battery cell 11 is accommodated in the first accommodating space 30c.

In some embodiments, two ends of the first beam 34 in the second direction Y are respectively connected to the two first sub-side walls 321, and two ends of the second beam 35 in the second direction Y are respectively connected to the two first sub-side walls 321.

In some embodiments, the first beam 34 is welded to the first bottom wall 31, and the second beam 35 is welded to the first bottom wall 31, such that the connection between the first beam 34 and the first bottom wall 31 is firm, and the connection between the second beam 35 and the first bottom wall 31 is firm.

In the above solution, the bracket 40, the first beam 34, the second beam 35, the first bottom wall 31, and the two first sub-side walls 321 enclose the first accommodating space 30c for accommodating the first battery cell 11. At the same time, the first beam 34 and the second beam 35 both cooperate with the first battery cell 11, facilitating the protection of the first battery cell 11 in the third direction X and reducing the risk of damage to the first battery cell 11.

According to some embodiments of the present application, cavities are formed inside both the first beam 34 and the second beam 35.

The first beam 34 and the second beam 35 can be processed by extrusion molding.

Strengthening ribs can be respectively formed inside the first beam 34 and the second beam 35, such that the first beam 34 and the second beam 35 have relatively high strength.

In the above solution, cavities are formed inside both the first beam 34 and the second beam 35, and the first beam 34 and the second beam 35 can be expansion beams, facilitating the absorption of the action force exerted by the first battery cell 11 in the third direction X.

Referring to FIG. 3 and FIG. 5, according to some embodiments of the present application, the number of the first battery cells 11 is multiple, and the multiple first battery cells 11 are stacked along the third direction X. The battery apparatus 100 further includes a first restraining member 80, the first restraining member 80 extends along the third direction X, the first restraining member 80 is located on a side of the first battery cell 11 back away from the first bottom wall 31, the first restraining member 80 is connected to the first battery cell 11, and two ends of the first restraining member 80 are respectively connected to the first beam 34 and the second beam 35.

The multiple first battery cells 11 are stacked along the third direction X, and the large surface of the first battery cell 11 can be perpendicular to the third direction X. The large surface of the first battery cell 11 can be the surface with a larger area of the first battery cell 11.

The first restraining member 80 can be called a tie bar, and two ends of the first restraining member 80 in the third direction X are respectively connected to the first beam 34 and the second beam 35, enabling the connection between the first beam 34 and the second beam 35 and the first bottom wall 31 to be stable, and also limiting the first battery cell 11.

The first restraining member 80 can be threadedly connected to the first beam 34 and the second beam 35. For example, two ends of the first restraining member 80 in the third direction X are each provided with a fifth mounting hole, the first beam 34 has a sixth mounting hole corresponding to the fifth mounting hole, and the second beam 35 has a seventh mounting hole corresponding to the fifth mounting hole. The battery apparatus 100 further includes a second locking member and a third locking member, the second locking member passes through the fifth mounting hole and the sixth mounting hole to lock one end of the first restraining member 80 to the first beam 34, and the third locking member passes through the fifth mounting hole and the seventh mounting hole to lock the other end of the first restraining member 80 to the second beam 35.

In some embodiments, the first restraining member 80 has a certain strength, for example, the material of the first restraining member 80 can be steel.

In some embodiments, the first restraining member 80 can include a first base and a first insulating layer, the material of the base can be metal and has relatively high strength, the first insulating layer is provided on the surface of the first base, and at least a portion of the first insulating layer is provided between the first base and the first battery cell 11. For example, the first insulating layer can be an insulating sleeve, and the first insulating layer is sleeved outside the first base.

In some embodiments, the first restraining member 80 is adhered to the first battery cell 11 through insulating glue, which insulates and isolates the first restraining member 80 from the first battery cell 11 while making the connection between the first restraining member 80 and the first battery cell 11 stable.

In some embodiments, the first beam 34 and the second beam 35 can be expansion beams. When the first battery cell 11 expands and deforms, the first beam 34 and the second beam 35 can absorb the action force exerted by the first battery cell 11 and restrain the expansion and deformation of the first battery cell 11.

In the above solution, the multiple first battery cells 11 are stacked along the third direction X, two ends of the first restraining member 80 are respectively connected to the first beam 34 and the second beam 35, and the first restraining member 80 is connected to the first battery cell 11. The first restraining member 80 can restrain the first battery cell 11 from moving in a direction back away from the first bottom wall 31. At the same time, the first restraining member 80 can also cooperate with the first beam 34 and the second beam 35 to restrain the expansion and deformation of the first battery cell 11 in the third direction X.

According to some embodiments of the present application, the number of the first restraining members 80 is multiple, the multiple first restraining members 80 are spaced apart along the second direction Y, and the second direction Y, the third direction X, and the first direction Z are pairwise perpendicular.

For example, the number of the first restraining members 80 corresponding to each first battery cell 11 is two, and the two first restraining members 80 are located at two ends of the first battery cell 11 in the second direction Y.

In some embodiments, the number of the first restraining members 80 can be four, and among the four first restraining members 80, two first restraining members 80 are respectively located at two ends of the first beam 34 (or the second beam 35) in the second direction Y.

In the above solution, the multiple first restraining members 80 are spaced apart along the second direction Y, enabling the connection of the first beam 34 and the second beam 35 at multiple positions in the second direction Y, further restricting the movement of the first battery cell 11 in the direction back away from the first bottom wall 31, and further restraining the expansion and deformation of the first battery cell 11 in the third direction X.

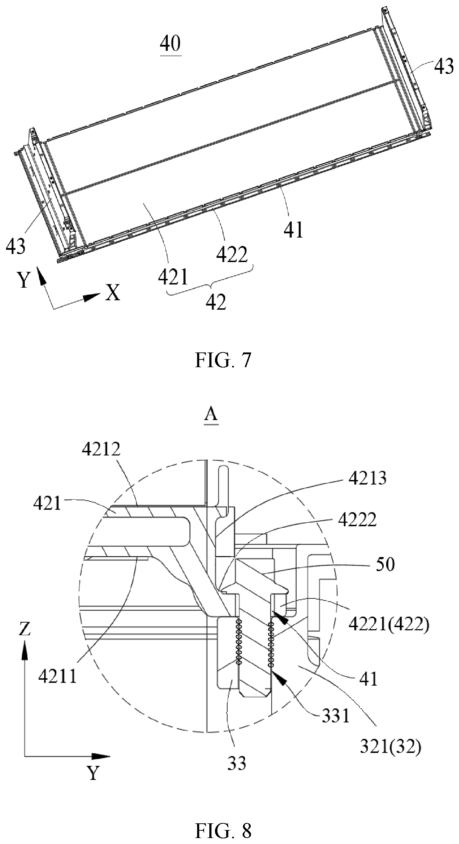

Referring to FIG. 6, and further referring to FIG. 7 and FIG. 8, FIG. 7 is a schematic structural diagram of a bracket provided in some embodiments of the present application, and FIG. 8 is a partial enlarged view at A in FIG. 4. According to some embodiments of the present application, the first protrusion 33 is provided with a first mounting hole 331, the bracket 40 is provided with a second mounting hole 41 corresponding to the first mounting hole 331, the battery apparatus 100 further includes a locking piece 50, and the locking piece 50 passes through the second mounting hole 41 and the first mounting hole 331 to lock the bracket 40 to the first protrusion 33.

The bracket 40 can be located on a side of the first protrusion 33 back away from the first bottom wall 31.

The locking piece 50 is a component configured to lock the bracket 40 to the first protrusion 33, and the locking piece 50 can be threadedly connected to the first protrusion 33. For example, the first mounting hole 331 can be a threaded hole, the locking piece 50 can have a threaded section corresponding to the first mounting hole 331, and the locking piece 50 is threadedly engaged with the first mounting hole 331.

The second mounting hole 41 is coaxially disposed with the first mounting hole 331, and the second mounting hole 41 can be a through hole provided in the bracket 40, helping the locking piece 50 to pass through the second mounting hole 41 and then cooperate with the first mounting hole 331.

In the above solution, the bracket 40 is locked to the first protrusion 33 through the locking piece 50, facilitating the assembly of the bracket 40 with the first protrusion 33, firm connection between the bracket 40 and the first protrusion 33, and the disassembly of the bracket 40 from the first protrusion 33.

Referring to FIG. 4, according to some embodiments of the present application, the bracket 40 includes a supporting wall 42, the supporting wall 42 is located between the first battery cell 11 and the second battery cell 21, the supporting wall 42 supports the second battery cell 21, and the supporting wall 42 is connected to the first protrusion 33.

The supporting wall 42 can be a portion of the bracket 40 configured to support the second battery cell 21, and the supporting wall 42 is configured to connect to the first protrusion 33.

Along the first direction Z, the supporting wall 42 is located between the first battery cell 11 and the second battery cell 21.

In some embodiments, the second battery cell 21 can be adhered to the surface of the supporting wall 42 back away from the first battery cell 11.

In the above solution, the supporting wall 42 is located between the first battery cell 11 and the second battery cell 21, facilitating the separation of the first battery cell 11 and the second battery cell 21; and the second battery cell 21 can be integrated into the supporting wall 42, facilitating the improvement of the assembly efficiency of the battery apparatus 100.

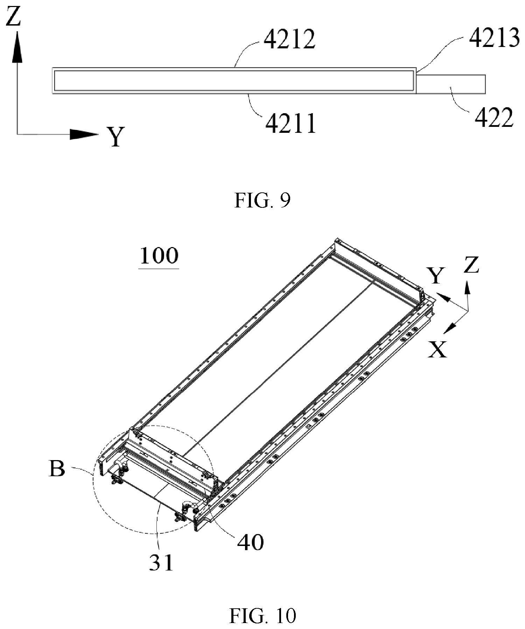

Referring to FIG. 8 and FIG. 9, FIG. 9 is a schematic structural diagram of a supporting wall provided in some embodiments of the present application. According to some embodiments of the present application, the supporting wall 42 includes a body 421 and an extending portion 422, the body 421 supports the second battery cell 21, the body 421 has a first surface 4211 and a second surface 4212 oppositely disposed along the first direction Z, and an outer peripheral surface 4213 connecting the first surface 4211 and the second surface 4212, the extending portion 422 protrudes from the outer peripheral surface 4213 and is connected to the first protrusion 33, and the first accommodating space 30c and the second accommodating space 30d are distributed along the first direction Z.

The body 421 is a portion of the supporting wall 42 configured to support the second battery cell 21, and the extending portion 422 is a portion of the supporting wall 42 configured to connect to the first protrusion 33.

The first surface 4211 and the second surface 4212 are two surfaces of the body 421 opposite in the first direction Z, the first surface 4211 can be the surface of the body facing the first bottom wall 31, and the second surface 4212 can be the surface of the body back away from the first bottom wall 31.

The outer peripheral surface 4213 refers to the surface of the body 421 connecting the first surface 4211 and the second surface 4212. In some embodiments, the outer peripheral surface 4213 can be configured to face the inner surface of the first side wall 32. The extending portion 422 protrudes from the outer peripheral surface 4213, facilitating the connection of the extending portion 422 with the first protrusion 33.

In some embodiments, the extending portion 422 and the body 421 can both be flat plates, and the extending portion 422 is coplanar with the body 421.

In some embodiments, referring to FIG. 8, the extending portion 422 can include a connecting portion 4221 and a transition portion 4222, the connecting portion 4221 can be disposed parallel to the body 421, the transition portion 4222 connects the body 421 and the connecting portion 4221, the connecting portion 4221 is closer to the first protrusion 33 than the body 421, and the connecting portion 4221 is connected to the first protrusion 33.

In some embodiments, the body 421 and the extending portion 422 are integrally formed, for example, the supporting wall 42 is processed by extrusion molding.

In some embodiments, the supporting wall 42 has a certain strength, and the material of the supporting wall 42 can be metal, such as aluminum or aluminum alloy.

In the above solution, the body 421 has relatively high strength, facilitating the support of the second battery cell 21 by the body 421; and the extending portion 422 protrudes from the outer peripheral surface 4213 of the body 421 and is connected to the first protrusion 33, facilitating the assembly of the supporting wall 42 with the first protrusion 33.

Referring to FIG. 3 and FIG. 7, according to some embodiments of the present application, the bracket 40 further includes two second side walls 43 oppositely disposed along the third direction X, the two second side walls 43 are connected to the supporting wall 42, the second battery cell 21 is disposed between the two second side walls 43, the third direction X is perpendicular to the first direction Z, and the first accommodating space 30c and the second accommodating space 30d are distributed along the first direction Z.

The second side wall 43 can be welded to the supporting wall 42, such that the connection between the second side wall 43 and the supporting wall 42 is firm.

The two second side walls 43 can be disposed parallel to each other, and the two second side walls 43 are spaced apart in the third direction X, facilitating the enclosure of a second chamber for accommodating the second battery cell 21 by the supporting wall 42 and the two second side walls 43.

The second side wall 43 can cooperate with the second battery cell 21. For example, the second side wall 43 can be attached to the second battery cell 21, or a gasket such as a thermal insulation pad or a buffer pad can be provided between the second side wall 43 and the second battery cell 21, and the second side wall 43 can be connected to the second battery cell 21 through the gasket.

In the above solution, the two second side walls 43 are connected to the supporting wall 42, and the two second side walls 43 and the supporting wall 42 enclose a space for accommodating the second battery cell 21. At the same time, the second side wall 43 cooperates with the second battery cell 21, facilitating the protection of the second battery cell 21 in the third direction X and reducing the risk of damage to the second battery cell 21.

Referring to FIG. 3 and FIG. 7, according to some embodiments of the present application, the number of the second battery cells 21 is multiple, and the multiple second battery cells 21 are stacked along the third direction X. The battery apparatus 100 further includes a second restraining member 60, the second restraining member 60 extends along the third direction X, the second restraining member 60 is located on a side of the second battery cell 21 back away from the supporting wall 42, the second restraining member 60 is connected to the second battery cell 21, and two ends of the second restraining member 60 are respectively connected to the two second side walls 43.

The multiple second battery cells 21 are stacked along the third direction X, and the large surface of the second battery cell 21 can be perpendicular to the third direction X. The large surface of the second battery cell 21 can be the surface with a larger area of the second battery cell 21.

The second restraining member 60 can be called a tie bar, and two ends of the second restraining member 60 in the third direction X are respectively connected to the two second side walls 43, enabling the connection between the second side wall 43 and the supporting wall 42 to be stable, and also limiting the second battery cell 21.

The second restraining member 60 can be threadedly connected to the second side wall 43. For example, two ends of the second restraining member 60 in the third direction X are each provided with a third mounting hole, the second side wall 43 has a fourth mounting hole corresponding to the third mounting hole, and the battery apparatus 100 further includes a first locking member. The first locking member passes through the third mounting hole and the fourth mounting hole to lock the second restraining member 60 to the second side wall 43.

In some embodiments, the second restraining member 60 has a certain strength, for example, the material of the second restraining member 60 can be steel.

In some embodiments, the second restraining member 60 can include a second base and a second insulating layer, the material of the second base can be metal and has relatively high strength, the second insulating layer is provided on the surface of the second base, and at least a portion of the second insulating layer is provided between the second base and the second battery cell 21. For example, the second insulating layer can be an insulating sleeve, and the second insulating layer is sleeved outside the second base.

In some embodiments, the second restraining member 60 is adhered to the second battery cell 21 through insulating glue, which insulates and isolates the second restraining member 60 from the second battery cell 21 while making the connection between the second restraining member 60 and the second battery cell 21 stable.

In some embodiments, the second side wall 43 can be an expansion beam. When the second battery cell 21 expands and deforms, the second side wall 43 can absorb the action force exerted by the second battery cell 21 and restrain the expansion and deformation of the second battery cell 21.

In the above solution, the multiple second battery cells 21 are stacked along the third direction X, two ends of the second restraining member 60 are respectively connected to the two second side walls 43, and the second restraining member 60 is connected to the second battery cell 21. The second restraining member 60 can restrain the second battery cell 21 from moving in a direction back away from the supporting wall 42. At the same time, the second restraining member 60 can also cooperate with the two second side walls 43 to restrain the expansion and deformation of the second battery cell 21 in the third direction X.

According to some embodiments of the present application, the number of the second restraining members 60 can be multiple, the multiple second restraining members 60 are spaced apart along the second direction Y, and the second direction Y, the third direction X, and the first direction Z are pairwise perpendicular.

For example, the number of the second restraining members 60 corresponding to each second battery cell 21 is two, and the two second restraining members 60 are located at two ends of the second battery cell 21 in the second direction Y.

In some embodiments, the number of the second restraining members 60 can be four, and among the four second restraining members 60, two second restraining members 60 are respectively located at two ends of the second side wall 43 in the second direction Y.

In the above solution, the multiple second restraining members 60 are spaced apart along the second direction Y, enabling the connection of the two second side walls 43 at multiple positions in the second direction Y, further restricting the movement of the second battery cell 21 in the direction back away from the supporting wall 42, and further restraining the expansion and deformation of the second battery cell 21 in the third direction X.

Referring to FIG. 7, according to some embodiments of the present application, a cavity is formed inside the second side wall 43.

The second side wall 43 can be a hollow structure inside, and the second side wall 43 can be processed by extrusion molding.

The strengthening rib can be formed inside the second side wall 43, such that the second side wall 43 has relatively high strength.

In the above solution, a cavity is formed inside the second side wall 43, and the second side wall 43 can be an expansion beam, facilitating the absorption of the action force exerted by the second battery cell 21 in the third direction X.

Referring to FIG. 4, according to some embodiments of the present application, the box 30 includes a first bottom wall 31, the first bottom wall 31 supports the first battery cell 11, a first flow channel 311 is formed inside the first bottom wall 31, and the first flow channel 311 is used for accommodating a heat exchange medium; and a second flow channel 44 is formed inside the bracket 40, and the second flow channel 44 is used for accommodating a heat exchange medium.

The first flow channel 311 is a channel formed inside the first bottom wall 31 and used for the flow of the heat exchange medium. After the assembly of the battery apparatus 100 is completed, the first flow channel 311 can accommodate the heat exchange medium, facilitating heat exchange between the first bottom wall 31 and the first battery cell 11. For example, when the heat exchange medium is a cooling medium, the low temperature of the heat exchange medium is transferred to the first battery cell 11 through the first bottom wall 31, which can reduce the temperature of the first battery cell 11. As another example, when the heat exchange medium is a heating medium, the high temperature of the heat exchange medium is transferred to the first battery cell 11 through the first bottom wall 31, which can increase the temperature of the first battery cell 11.

In some embodiments, the first bottom wall 31 can have good thermal conductivity, facilitating heat exchange between the heat exchange medium and the first battery cell 11.

The second flow channel 44 is a channel formed inside the bracket 40 and used for the flow of the heat exchange medium. After the assembly of the battery apparatus 100 is completed, the second flow channel 44 can accommodate the heat exchange medium, facilitating heat exchange between the bracket 40 and the second battery cell 21. For example, when the heat exchange medium is a cooling medium, the low temperature of the heat exchange medium is transferred to the second battery cell 21 through the bracket 40, which can reduce the temperature of the second battery cell 21. As another example, when the heat exchange medium is a heating medium, the high temperature of the heat exchange medium is transferred to the second battery cell 21 through the bracket 40, which can increase the temperature of the second battery cell 21.

In some embodiments, the bracket 40 can have good thermal conductivity, facilitating heat exchange between the heat exchange medium and the second battery cell 21 through the bracket 40.

At the same time, since the bracket 40 is located between the first battery cell 11 and the second battery cell 21, the bracket 40 can also regulate the temperature of the first battery cell 11.

In some embodiments, the heat exchange medium is a fluid, and the heat exchange medium can be, but is not limited to, water, alcohol, or other liquid mixtures.

In the above solution, the first flow channel 311 accommodates the heat exchange medium, facilitating heat exchange between the first bottom wall 31 and the first battery cell 11 to regulate the temperature of the first battery cell 11; and the second flow channel 44 accommodates the heat exchange medium, facilitating heat exchange between the bracket 40 and the second battery cell 21 to regulate the temperature of the second battery cell 21. At the same time, since the bracket 40 is located between the second battery cell 21 and the first battery cell 11, the bracket 40 can also perform heat exchange with the first battery cell 11 to regulate the temperature of the first battery cell 11.

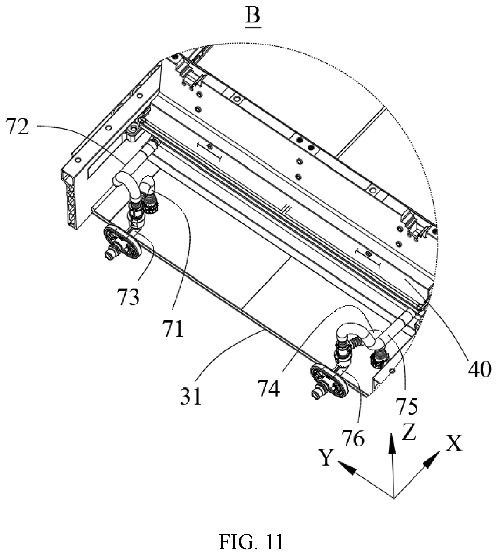

Referring to FIG. 4, and further referring to FIG. 10 and FIG. 11, FIG. 10 is a schematic diagram of a partial structure of a battery apparatus provided in some embodiments of the present application, and FIG. 11 is a partial enlarged view at B in FIG. 10. According to some embodiments of the present application, the battery apparatus 100 further includes a first inlet branch pipe 71, a second inlet branch pipe 72, and an inlet main pipe 73. The first inlet branch pipe 71 is connected to the first bottom wall 31 and communicates with the first flow channel 311, the second inlet branch pipe 72 is connected to the bracket 40 and communicates with the second flow channel 44, and the first inlet branch pipe 71 and the second inlet branch pipe 72 both communicate with the inlet main pipe 73; and/or, the battery apparatus 100 further includes a first outlet branch pipe 74, a second outlet branch pipe 75, and an outlet main pipe 76, the first outlet branch pipe 74 is connected to the first bottom wall 31 and communicates with the first flow channel 311, the second outlet branch pipe 75 is connected to the bracket 40 and communicates with the second flow channel 44, and the first outlet branch pipe 74 and the second outlet branch pipe 75 both communicate with the outlet main pipe 76.

In some embodiments, the first inlet branch pipe 71 and the second inlet branch pipe 72 can be connected to the inlet main pipe 73 through a tee joint, facilitating the heat exchange medium delivered by the inlet main pipe 73 to enter both the first inlet branch pipe 71 and the second inlet branch pipe 72.

The first bottom wall 31 can be provided with a first opening communicating with the first flow channel 311, and the first inlet branch pipe 71 is connected to the first opening, facilitating the communication between the first inlet branch pipe 71 and the first flow channel 311. The first inlet branch pipe 71 is sealingly connected to the first bottom wall 31, reducing the risk of leakage of the heat exchange medium from the joint between the first inlet branch pipe 71 and the first bottom wall 31.

The bracket 40 can be provided with a second opening communicating with the second flow channel 44, and the second inlet branch pipe 72 is connected to the second opening, facilitating the communication between the second inlet branch pipe 72 and the second flow channel 44. The second inlet branch pipe 72 is sealingly connected to the bracket 40, reducing the risk of leakage of the heat exchange medium from the joint between the second inlet branch pipe 72 and the bracket 40.

In some embodiments, the first outlet branch pipe 74 and the second outlet branch pipe 75 can be connected to the outlet main pipe 76 through a tee joint, facilitating the discharge of the heat exchange medium delivered by the first outlet branch pipe 74 and the second outlet branch pipe 75 through the outlet main pipe 76.

The first bottom wall 31 can be provided with a third opening communicating with the first flow channel 311, and the first outlet branch pipe 74 is connected to the third opening, facilitating the communication between the first outlet branch pipe 74 and the first flow channel 311. The first outlet branch pipe 74 is sealingly connected to the first bottom wall 31, reducing the risk of leakage of the heat exchange medium from the joint between the first outlet branch pipe 74 and the first bottom wall 31.

The bracket 40 can be provided with a fourth opening communicating with the second flow channel 44, and the second outlet branch pipe 75 is connected to the fourth opening, facilitating the communication between the second outlet branch pipe 75 and the second flow channel 44. The second outlet branch pipe 75 is sealingly connected to the bracket 40, reducing the risk of leakage of the heat exchange medium from the joint between the second outlet branch pipe 75 and the bracket 40.

In some embodiments, the battery apparatus 100 further includes a first inlet branch pipe 71, a second inlet branch pipe 72, an inlet main pipe 73, a first outlet branch pipe 74, a second outlet branch pipe 75, and an outlet main pipe 76. The first inlet branch pipe 71 and the first outlet branch pipe 74 are both connected to the first bottom wall 31, and the heat exchange medium circulates and flows in the first flow channel 311; and the second inlet branch pipe 72 and the second outlet branch pipe 75 are both connected to the bracket 40, and the heat exchange medium circulates and flows in the second flow channel 44.

In some embodiments, the inlet main pipe 73 and the outlet main pipe 76 are respectively connected to an external container, and the external container accommodates the heat exchange medium. The external container can be a container of the electric device that accommodates the heat exchange medium.

In some embodiments, the box 30 is provided with a first pipe joint connected to the inlet main pipe 73 and a second pipe joint connected to the outlet main pipe 76, the first pipe joint is used to connect to the external container through a first pipe, and the second pipe joint is used to connect to the external container through a second pipe.

In some embodiments, the first inlet branch pipe 71 can be disposed in parallel with the second inlet branch pipe 72, and the first outlet branch pipe 74 can be disposed in parallel with the second outlet branch pipe 75.

In the above solution, the first inlet branch pipe 71 and the second inlet branch pipe 72 both communicate with the inlet main pipe 73, facilitating the delivery of the heat exchange medium to the first flow channel 311 and the second flow channel 44 through the inlet main pipe 73; and the first outlet branch pipe 74 and the second outlet branch pipe 75 both communicate with the outlet main pipe 76, facilitating the output of the heat exchange medium flowing out from the first flow channel 311 and the second flow channel 44 through the outlet main pipe 76.

Referring to FIG. 6 and FIG. 11, in some embodiments, when the box 30 includes two second sub-side walls, the two second sub-side walls are provided at two ends of the first bottom wall 31 in the third direction X, the first beam and the second beam are provided between the two second sub-side walls, along the third direction X, an electrical chamber for accommodating electrical components (such as a high-voltage box or a battery management unit) is formed between the first beam 34 and the adjacent second sub-side wall 322, and the first inlet branch pipe 71, the second inlet branch pipe 72, the inlet main pipe 73, the first outlet branch pipe 74, the second outlet branch pipe 75, and the outlet main pipe 76 are all provided in the electrical chamber.

According to some embodiments of the present application, embodiments of the present application further provide an electric device, which includes the battery apparatus 100 provided according to any one of the above embodiments.

The battery apparatus 100 is configured to provide electrical energy.

According to some embodiments of the present application, referring to FIG. 2 to FIG. 11, embodiments of the present application provide a battery apparatus 100, which includes a first box 30a, a second box 30b, a first battery cell 11, a second battery cell 21, and a bracket 40.

The first box 30a and the second box 30b are oppositely disposed along a first direction, the first box 30a and the second box 30b are fitted with each other, the bracket 40 is disposed in the box 30, the first box 30a and the bracket 40 enclose a first accommodating space 30c, the second box 30b and the bracket 40 enclose a second accommodating space 30d, the first battery cell 11 is accommodated in the first accommodating space 30c, the second battery cell 21 is accommodated in the second accommodating space 30d, and the first accommodating space 30c and the second accommodating space 30d are distributed along the first direction Z.

Along the first direction Z, the bracket 40 is disposed between the first battery cell 11 and the second battery cell 21.

The first box 30a includes a first bottom wall 31 and a first side wall 32, the first side wall 32 is provided around the first bottom wall 31, and the first bottom wall 31 supports the first battery cell 11. The first side wall 32 includes two first sub-side walls 321 oppositely disposed along a second direction Y, the first battery cell 11 is disposed between the two first sub-side walls 321, the first protrusion 33 is formed on an inner surface of the first sub-side wall 321, the bracket 40 is located on a side of the first protrusion 33 back away from the first bottom wall 31, and two ends of the bracket 40 in the second direction Y are respectively connected to the first protrusions 33 on the two first sub-side walls 321. The first protrusion 33 extends along a third direction X, and the bracket 40 is locked to the first protrusion 33 through a locking piece 50.

In the battery apparatus 100 according to embodiments of the present application, the bracket 40 is detachably connected to the first protrusion 33, the second battery cell 21 can be integrated into the bracket 40, and during the assembly process of the battery apparatus 100, the assembly of the first battery cell 11 with the first bottom wall 31 and the assembly of the second battery cell 21 with the bracket 40 can be performed synchronously, saving assembly time and improving assembly efficiency. At the same time, the bracket 40 is connected to the first protrusion 33, and the first protrusion 33 is formed on the inner surface of the first sub-side wall 321, making the bracket 40 and the first protrusion 33 have relatively high assembly efficiency, and improving the reliability of the battery apparatus 100.

Although the present application has been described with reference to preferred embodiments, various improvements can be made thereto and components therein can be replaced with equivalents without departing from the scope of the present application. In particular, as long as there is no structural conflict, the various technical features mentioned in the various embodiments can be combined in any manner. The present application is not limited to the specific embodiments disclosed herein, but includes all technical solutions falling within the scope of the claims.

## Claims

1. A battery apparatus, **characterized by** comprising:
a box;
a bracket, disposed in the box and dividing an internal space of the box into a first accommodating space and a second accommodating space located on two sides of the bracket; and
a first battery cell and a second battery cell, wherein the first battery cell is disposed in the first accommodating space and supported on the box; and the second battery cell is disposed in the second accommodating space and supported on the bracket;
wherein a wall of the box is provided with a first protrusion, and the bracket is connected to the first protrusion.

2. The battery apparatus according to claim 1, **characterized in that** the box comprises a first box and a second box oppositely disposed along a first direction, the first box and the second box are fitted with each other, the first protrusion is formed on the first box, the first box and the bracket enclose the first accommodating space, and the second box and the bracket enclose the second accommodating space.

3. The battery apparatus according to claim 2, **characterized in that** the first box comprises a first bottom wall and a first side wall, the first side wall is provided around the first bottom wall, the first bottom wall supports the first battery cell, and the first protrusion is provided at an end of the first side wall back away from the first bottom wall.

4. The battery apparatus according to claim 3, **characterized in that** the first side wall comprises two first sub-side walls oppositely disposed along a second direction, the first battery cell is disposed between the two first sub-side walls, the first protrusion is formed on an inner surface of the first sub-side wall, and the second direction is perpendicular to the first direction.

5. The battery apparatus according to claim 4, **characterized in that** the first protrusion extends along a third direction, and the third direction, the second direction, and the first direction are pairwise perpendicular.

6. The battery apparatus according to any one of claims 3 to 5, **characterized in that** the first side wall comprises two second sub-side walls oppositely disposed along the third direction; and
the first box further comprises a first beam and a second beam spaced apart along the third direction, the first beam and the second beam are connected to the first bottom wall, the first beam and the second beam are located between the two second sub-side walls, the first battery cell is located between the first beam and the second beam, and the third direction is perpendicular to the first direction.

7. The battery apparatus according to claim 6, **characterized in that** cavities are formed inside both the first beam and the second beam.

8. The battery apparatus according to claim 6 or 7, **characterized in that** the number of the first battery cells is multiple, and the multiple first battery cells are stacked along the third direction; and
the battery apparatus further comprises a first restraining member, the first restraining member extends along the third direction, the first restraining member is located on a side of the first battery cell back away from the first bottom wall, the first restraining member is connected to the first battery cell, and two ends of the first restraining member are respectively connected to the first beam and the second beam.

9. The battery apparatus according to claim 8, **characterized in that** the number of the first restraining members is multiple, the multiple first restraining members are spaced apart along the second direction, and the second direction, the third direction, and the first direction are pairwise perpendicular.

10. The battery apparatus according to any one of claims 1 to 9, **characterized in that** the first protrusion is provided with a first mounting hole, the bracket is provided with a second mounting hole corresponding to the first mounting hole, the battery apparatus further comprises a locking piece, and the locking piece passes through the second mounting hole and the first mounting hole to lock the bracket to the first protrusion.

11. The battery apparatus according to any one of claims 1 to 10, **characterized in that** the bracket comprises a supporting wall, the supporting wall is located between the first battery cell and the second battery cell, the supporting wall supports the second battery cell, and the supporting wall is connected to the first protrusion.

12. The battery apparatus according to claim 11, **characterized in that** the supporting wall comprises a body and an extending portion, the body supports the second battery cell, the body has a first surface and a second surface oppositely disposed along the first direction, and an outer peripheral surface connecting the first surface and the second surface, the extending portion protrudes from the outer peripheral surface and is connected to the first protrusion, and the first accommodating space and the second accommodating space are distributed along the first direction.

13. The battery apparatus according to claim 11 or 12, **characterized in that** the bracket further comprises two second side walls oppositely disposed along the third direction, the two second side walls are connected to the supporting wall, the second battery cell is disposed between the two second side walls, the third direction is perpendicular to the first direction, and the first accommodating space and the second accommodating space are distributed along the first direction.

14. The battery apparatus according to claim 13, **characterized in that** the number of the second battery cells is multiple, and the multiple second battery cells are stacked along the third direction; and
the battery apparatus further comprises a second restraining member, the second restraining member extends along the third direction, the second restraining member is located on a side of the second battery cell back away from the supporting wall, the second restraining member is connected to the second battery cell, and two ends of the second restraining member are respectively connected to the two second side walls.

15. The battery apparatus according to claim 14, **characterized in that** the number of the second restraining members is multiple, the multiple second restraining members are spaced apart along the second direction, and the second direction, the third direction, and the first direction are pairwise perpendicular.

16. The battery apparatus according to any one of claims 13 to 15, **characterized in that** a cavity is formed inside the second side wall.

17. The battery apparatus according to any one of claims 1 to 16, **characterized in that** the box comprises a first bottom wall, the first bottom wall supports the first battery cell, a first flow channel is formed inside the first bottom wall, and the first flow channel is used for accommodating a heat exchange medium; and
a second flow channel is formed inside the bracket, and the second flow channel is used for accommodating a heat exchange medium.

18. The battery apparatus according to claim 17, **characterized in that** the battery apparatus further comprises a first inlet branch pipe, a second inlet branch pipe, and an inlet main pipe, the first inlet branch pipe is connected to the first bottom wall and communicates with the first flow channel, the second inlet branch pipe is connected to the bracket and communicates with the second flow channel, and the first inlet branch pipe and the second inlet branch pipe both communicate with the inlet main pipe; and/or
the battery apparatus further comprises a first outlet branch pipe, a second outlet branch pipe, and an outlet main pipe, the first outlet branch pipe is connected to the first bottom wall and communicates with the first flow channel, the second outlet branch pipe is connected to the bracket and communicates with the second flow channel, and the first outlet branch pipe and the second outlet branch pipe both communicate with the outlet main pipe.

19. An electric device, **characterized by** comprising the battery apparatus according to any one of claims 1 to 18.
